# EUROPEAN PATENT APPLICATION

(11) **EP 3 219 198 A1**
(43) Date of publication of application: **20.09.2017**
(21) Application number: 17000289.3
(22) Date of filing: 23.02.2017
(51) Int. Cl.: A01G 31/02, A01G 31/06

(54) **HYDROPONIC DEVICE**

(30) Priority: 14.03.2016 CZ 201632189 U
(71) Applicant: Nedbálek, Ondrej, 718 00 Ostrava-Kuncicky (CZ); Gebauer, Pavel, 736 01 Havirov-Sumbark (CZ)
(72) Inventor: Nedbálek, Ondrej, 718 00 Ostrava-Kuncicky (CZ); Gebauer, Pavel, 736 01 Havirov-Sumbark (CZ)
(74) Representative: PATENTSERVIS Praha, a.s.

(57) **Abstract**

A hydroponic device using the Nutrient Film Technique (NFT), which device is arranged as a vertical growing system with gravity flow of nutrient water to the grown plants. The hydroponic device comprises growing vessels, an inflow of nutrient water into the growing vessel and an outlet of the nutrient water from the growing vessel. At least two growing vessels (1) are comprised, which are placed one above the other in a longitudinal but mutually opposite inclination, wherein the lower end of each inclined growing vessel (1) is provided with an outlet socket (3) for output of the nutrient water, which outlet socket (3) serves as the inflow of the nutrient water into the attached upper end of the lower positioned and inclined growing vessel (1).

## Description

### Field of the Invention

The invention relates to a hydroponic device using the Nutrient Film Technique (NFT), which device is arranged as a vertical growing system with gravity flow of nutrient water to the grown plants.

### Background of the Invention

The up to now known hydroponic NFT systems use growing vessels for nutrient water or growing vessels for providing flow of the nutrient water, which vessels are of various shape and functional design. In hydroponics, growing vessels are often used that are filled with a medium replacing soil, such as e.g. stone wool, nonwoven fabric, ceramic stones, perlite, etc., or more of these media in a combination. Also, it is known to use a vertically hanging panel of glass wool, which panel is placed in a plastic envelope that is cut through at its top side to provide an inlet for the nutrient water and at its bottom side to provide an outlet to drain the nutrient water, and also provided with a slit which is cut into this plastic envelope on its front side to allow insertion of plants to be grown. Growing of plants in these media is very disadvantageous because it does not allow adequate control of the root structure of the plants. There is a risk of excess watering or of insufficient watering of some plants in rows. In case of a system where each plant has its own supply of the nutrient water, it is a disadvantage that each individual supply, or plant require regular inspection. The growing vessels for the NFT hydroponics usually are of a circular or square profile. In the growing vessels with circular profile it happens that all nutrient water is held in the middle of the profile, it flows through, thereby incorrect watering of the plants takes place. A similar problem is observed also in the plastic growing vessels that are provided with a horizontal flat bottom, where bowing of the bottom takes place or where in its inclined positioning the nutrient water flows through on a portion of the bottom surface of the growing vessel only, whereby not enough nutrient water gets to the plant roots, and therefore, there is a threat that the plants become dwarfed or fade. This problem has been solved by inserting of a nonwoven fabric onto the bottom of the growing vessel to ensure the flow of water over the whole surface area of its bottom, or it has been solved by planting the plants into the so-called Rockwool blocks placed into the growing vessel, which blocks suck the nutrient water from the bottom and transmit it to the plant roots, or it has been solved by pouring ceramic stones into the growing vessels. The above-mentioned solutions make the NFT hydroponics expensive, it is time consuming, because, when harvesting the plants, it is necessary to separate the reusable materials from the roots and to clean the growing vessels for their reuse. The prior art horizontally or vertically arranged devices for the NFT hydroponics have used either a constant or an intermittent water flow. In case of the constant flow of the nutrient water, overflowing happened frequently, and thus the roots have drowned. In case of the intermittent flow of the nutrient water, the pump has been switched on and off alternately, what has affected its service life negatively, and the nutrient water has been supplied to the plant roots in nonuniform amounts, what has not been for the benefit of the plants.

### Summary of the Invention

Said problems are solved by a hydroponic device according to this invention. This device is designed as in the prior art in that it comprises one or a plurality of growing vessels that are provided with an inlet and an outlet of the nutrient water. The subject-matter of the invention is that it comprises at least two growing vessels, which vessels are placed one above the other in a longitudinal but mutually opposite inclination. The lower end of each inclined growing vessel is provided with an outlet socket for output of the nutrient water, which outlet socket serves as the inflow of the nutrient water into the below attached growing vessel, which is situated in the opposite inclination. Therefore, the outlet socket is extended by a sleeve, which sleeve is introduced into the upper end of the lower growing vessel. The subject-matter of the hydroponic device according to this invention comprises also the following possible specific embodiments of the invention: The growing vessel is covered with a cover. At one end, the cover is provided with a hole serving to input nutrient water. The front side surface of the cover is inclined and provided with a series of openings for the outgrowth of plants. The growing vessels are mounted on a frame, which frame comprises at least two uprights and at least two crosspieces arranged in a rectangle form. The uprights and the crosspieces are firmly fixed together by a screw, which screw is screwed into a perpendicular opening of the crosspiece and into a dowel placed in a cavity of the upright profile. Below, the frame is provided with height adjustable feet. The growing vessels are mounted on the frame as placed on brackets. A fork shaped holder is provided on the rear side of each bracket, which is used for fixing of the bracket to the upright or to the crosspiece of the frame. On the front side, the bracket is provided with an end stop for securing of the growing vessel against shifting, and with a hook to fasten a string or a support used for fixing of the plants. The hydroponic device according to this invention exhibits a number of advantages and benefits over the prior art hydroponic systems. The hydroponic device according to this invention exhibits a number of advantages and benefits if compared with the prior art hydroponic systems. The hydroponic device can be operated in small spaces. Production and delivery of this hydroponic system in the form of a kit to be assembled at site is possible. The set may be designed in a variety of alternative configurations, e.g. as a single-wall or a multi-wall system, or as a two-level or a multi-level system. A significant advantage is that the supply of nutrient water to the plants takes place in a closed circuit, what allows to add to the hydroponic device some form of aquarium fish breeding, and to operate the system in an aquaponics system, or vice versa. By this combined system of growing plants, considerable operational savings are achieved.

### Brief Description of the Drawing

The attached drawings show an embodiment of a hydroponic device according to the invention as an example:
Fig. 1 shows a schematic view of the whole device layout;
Fig. 2 shows a growing vessel in front elevation view;
Fig. 3 shows the same in top plan view;
Fig. 4 shows the same in side view.
Fig. 5 shows a view of a part of the bottom of a growing vessel in a section along the plane indicated by line A-A in Fig. 3.
FIG. 6 shows a cover of said growing vessel in front view; and
Fig. 7 shows the same in top plan view.
Fig. 8 shows a bracket in front view; and
Fig. 9 shows the same in top plan view.
FIG. 10 shows mutual fixing of the upright and the crosspiece of the frame in cross-section.

### Detailed Description of the Invention

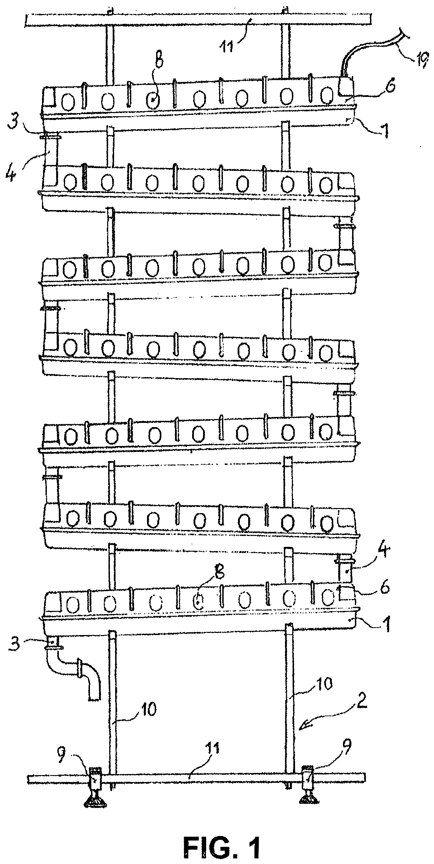

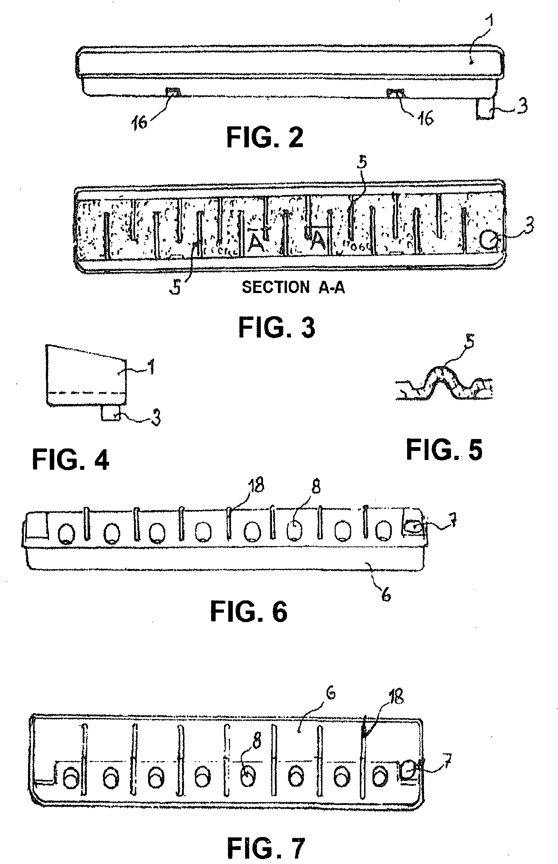

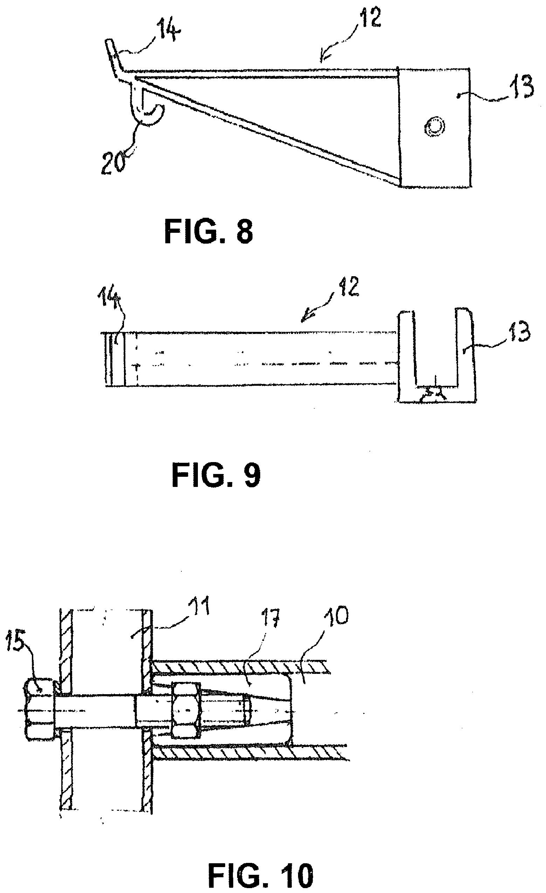

A hydroponic device comprises growing vessels **1**, a frame **2** for their placement, a nutrient water inflow into the growing vessel **1**, and a nutrient water outlet from the growing vessel **1**. In this exemplary embodiment seven growing vessels **1** were used. The vessels **1** were arranged on the frame **2**, one above another, and with longitudinal mutually opposite inclination, so as it is shown in Fig. 1. The growing vessels **1** were made of plastics. On the surface area of their bottoms cross-shaped ribs **5** were formed. These ribs **5** were directed alternately from one longitudinal wall of the respective growing vessel **1**, to which the ribs **5** abut, to the opposite other longitudinal wall, to which they do not abut, as it is shown in Fig. 3. By this arrangement, the ribs **5** form a gap between the longitudinal wall to which they do not abut and the rib **5** on the bottom surface, which gap is used for flow of nutrient water in the growing vessel **1**. The rear longitudinal wall of the growing vessel **1** is higher than its front longitudinal wall, as it may be seen in Fig. 4. At the lower end, the inclined bottom of the growing vessel **1** is provided with an output socket **3** for connection of an outflow of the nutrient water from the upper growing vessel **1** into the upper end of the below positioned inclined growing vessel **1.** For this purpose, an extension sleeve **4** is put on the output socket **3**. Because the growing vessels **1** are inclined in the opposite direction, the vessels **1** are manufactured with an output socket **3** at their left or at their right sides. Each growing vessel 1 is provided with a plastics cover **6**, which cover **6** is provided with reinforcing stiffeners **18** on its surface as it is shown in Figures **6** and **7****.** Further, the cover **6** is provided with a hole **7** on one end for nutrient water inflow, as it is shown in Fig. 7. Surface of the cover **6** is inclined by about 45° in the front part, and the inclined portion is provided with a series of openings **8** for growing up of the plants, as it is shown in Figs 6 and 7. Typically, a wheel made of some foamed plastics is inserted into the openings **8.** It is cut in two up to its centre. The wheel serves for adjusting proper growth position of a plant and for shading of the interior of the growing vessel **1.** The frame **2** is assembled of two uprights **10** and two crosspieces **11** made of aluminium profiles, firmly joined together into the rectangle shape. In the bottom part the frame **2** is provided with two height-adjustable feet **9**, which feet **9** that are fixed to the lower crosspiece **11** of the frame **2**, as it is shown in Fig. 1. Mutual fixing is made e.g. by a screw, which screw **15** is put through the perpendicular opening in the crosspiece **11** and screwed into a dowel **17**, which dowel **17** is placed in the cross-section hollow of the upright **10**, as it is shown in Fig. 10. The growing vessels **1** are placed on the brackets **12** so as it is shown in Figures 8 and 9. The brackets **12** are fastened to the uprights **10** of the frame **2** with their forked holders **13** provided with locking screws. On the front side, the brackets **12** are provided with end stops 14, which end stops 14 fit into recesses **16** in the front longitudinal wall of the growing vessel **1**, whereby their correct position on the frame **2** is ensured. A hook **20** is provided in the lower part of the bracket **12**, which hook **20** is used for attaching of the support element for plants, e.g. by a twine. The nutrient water is supplied from a tank via a hose **19** to the highest placed growing vessel **1 on** the frame **2** through the hole **7** in the cover **6**. Owing to the inclination of the growing vessel 1, the nutrient water flows zigzag around the ribs **5** on the bottom of the growing vessel **1**, and then it flows via the output socket **3** into the extension sleeve **4**, by which sleeve **4** the nutrient water is supplied to the below situated growing vessel **1** through the hole **7** in its cover. In this way the nutrient water flows through the cultivation vessels **1** in all their position levels. The effluent nutrient water from the output socket **3** of the growing vessels **1** at the lowest level is then pumped back into the storage tank. By a continuous or intermittent flow of the nutrient water, which flow forms a closed circle of flow in the hydroponic device according to the invention, the nutrient water reaches all plants, consequently the plants grow uniformly and in the required quantity. The hydroponic device according to this invention can be implemented also in other embodiments. For example, when the artificial light is used, it is more effective to arrange a plurality of frames **2** provided with the cultivation vessels **1** in parallel to each other, whereby, potential of the light is exploited to the maximum. Also, the frame **2** can be assembled for a cascade positioning of the growing vessels **1**. When the natural illumination is used, it is effective to fix the frame **2** provided with the growing vessels **1** on a wall of a building, and the like.

### List of Reference Numerals

- 1: Growing vessel
- 2: Frame
- 3: Output socket
- 4: Sleeve
- 5: Rib
- 6: Cover
- 7: Hole
- 8: Opening
- 9: Foot
- 10: Upright
- 11: Crosspiece
- 12: Bracket
- 13: Holder
- 14: End stop
- 15: Screw
- 16: Recess
- 17: Dowel
- 18: Stiffener
- 19: Hose
- 20: Hook

## Claims

1. A hydroponic device comprising growing vessels, an inflow of nutrient water into the growing vessel and an outlet of the nutrient water from the growing vessel, **characterized in that** it comprises at least two growing vessels (1), which are placed one above the other in a longitudinal but mutually opposite inclination, wherein the lower end of each inclined growing vessel (1) is provided with an outlet socket (3) for output of the nutrient water, which outlet socket (3) serves as the inflow of the nutrient water into the attached upper end of the lower positioned and inclined growing vessel (1).

2. The hydroponic device according to claim 1, **characterized in that** the bottom surface of the growing vessel (1) is partly transversely dammed by ribs (5) which ribs (5) alternately extend from one longitudinal wall of the growing vessel (1) to the opposite other longitudinal wall, at which other wall the ribs (5) on the bottom surface form a gap on the bottom surface for flow passage of the nutrient water.

3. The hydroponic device according to claims 1 and 2, **characterized in that** the growing vessel (1) is provided with a cover (6) which cover (6) is provided with a hole (7) for the sleeve (4) for the influent nutrient water at one end, and the front surface of the cover (6) is inclined and provided with a series of openings (8) for plants growing up.

4. The hydroponic device according to claim 1 or claims 1 to 3, **characterized in that** the growing vessels (1) are fastened on the frame (2), which frame (2) is provided with height-adjustable feet (9) below and is assembled from at least two uprights (10) and at least two crosspieces (11) joined mutually into a rectangular shape.

5. The hydroponic device according to claim 1 or claims 1 to 4, **characterized in that** the growing vessels (1) are fastened to the frame (2) on brackets (12), which brackets (12) are provided with fork holders (13) for fixing of the brackets (12) to the frame (2) on the rear side and with end stops (14) to secure the growing vessels (1) and with hooks (20) for a binding or supporting means on the front side.

6. The hydroponic device of claim 1 or claims 1 to 5, **characterized in that** the uprights (10) and the crosspieces (11) are joined together by screws (15) placed in perpendicular openings of the crosspieces (11) and screwed into dowels (17) in the cross cavities of the uprights (10).
